# FASCICULE DE BREVET EUROPEEN

(11) **EP 3 294 576 B1**
(45) Date de publication et mention de la délivrance du brevet: **15.04.2020**
(21) Numéro de dépôt: 16722115.9
(22) Date de dépôt: 03.05.2016
(51) Int. Cl.: B60C 15/02, B60C 5/16, B60B 21/02, B60B 21/10, B60B 25/08, B60B 21/12, B60B 5/02

(54) **ADAPTATEUR POUR ENSEMBLE ROULANT ET ENSEMBLE ROULANT LE COMPRENANT**
ADAPTER FÜR EINE ROLLENDE ANORDNUNG UND ROLLENDE ANORDNUNG DAMIT
ADAPTOR FOR ROLLING ASSEMBLY AND ROLLING ASSEMBLY COMPRISING SAME

(30) Priorité: 12.05.2015 FR 1554219
(43) Date de publication de la demande: 21.03.2018
(73) Titulaire: Compagnie Générale des Etablissements Michelin, 63000 Clermont-Ferrand (FR)
(72) Inventeur: BARGUET, Henri, 63040 Clermont-Ferrand Cedex 9 (FR); TOPIN, Arthur, 63040 Clermont-Ferrand Cedex 9 (FR); AHOUANTO, Michel, 63530 Enval (FR)
(74) Mandataire: Bauvir, Jacques
(86) Numéro de dépôt international: PCT/EP2016/059831
(87) Numéro de publication internationale: WO 2016/180668

(56) Documents cités:
- EP-A1- 2 236 663
- EP-A2- 1 034 947
- WO-A1-00/78565
- WO-A1-92/01576
- GB-A- 2 085 375

## Description

L'invention concerne un adaptateur pour ensemble roulant comprenant un pneumatique et une jante, ledit adaptateur étant destiné à assurer la liaison entre le pneumatique et la jante. Il concerne également un ensemble roulant comprenant ledit adaptateur.

Un pneumatique est une structure torique dont l'axe de révolution est l'axe de rotation du pneumatique, comprenant une bande de roulement destinée à entrer en contact avec un sol, deux flancs et deux bourrelets destinés à entrer en contact avec une jante, les deux bourrelets étant reliés à la bande de roulement par les deux flancs.

On rappelle ci-après les définitions utilisées dans la présente invention :
- « direction axiale » : direction parallèle à l'axe de rotation du pneumatique,
- « direction radiale » : direction perpendiculaire à l'axe de rotation du pneumatique,
- « plan radial » : plan qui contient l'axe de rotation du pneumatique et défini par les directions radiale et axiale,
- « direction circonférentielle » : direction perpendiculaire à un plan radial,
- « plan équatorial » : plan perpendiculaire à l'axe de rotation et passant par le milieu de la bande de roulement du pneumatique.

Dans la demande WO 0078565 il est déjà connu d'insérer, entre les bourrelets d'un pneumatique et une jante, un élément de liaison ou adaptateur. Cet adaptateur, constitué de mélanges caoutchouteux renforcés, est déformable élastiquement au moins dans les deux directions radiale et axiale. Un tel adaptateur permet de dissocier la partie de l'ensemble roulant pouvant être considérée comme travaillant réellement comme un pneumatique, de la partie de l'ensemble roulant pouvant être considérée comme travaillant comme une jante.

Mais, si un tel ensemble roulant permet au pneumatique d'assurer ses fonctions usuelles, et notamment une réponse en poussée de dérive suivant l'application d'un angle de dérive au pneumatique qui confère ainsi à l'ensemble roulant une flexibilité suffisante pour protéger le pneumatique de toute dégradation, il ne garantit toutefois pas parfaitement une déformabilité suffisante de l'ensemble roulant lors de chocs sur des bordures de trottoirs ou dans des trous de la chaussée, tels que des nids de poule.

En effet, l'adaptateur de l'état de la technique ci-dessus référencé, assurant la liaison de chaque bourrelet du pneumatique avec la jante, n'a pas les caractéristiques mécaniques optimales, principalement en termes de rigidités, permettant d'absorber de grandes déformations lors du passage de l'ensemble roulant dans des nids de poule. Ceci peut entraîner des déformations plastiques résiduelles, voire la rupture, dudit adaptateur, et, par conséquent, l'endommagement de l'ensemble roulant.

De plus, aucune suggestion n'est donnée dans ce document sur des évolutions de conception de l'adaptateur permettant de surmonter les inconvénients précédemment décrits.

Le document GB62085375A divulgue un adaptateur ayant les caractéristiques techniques du préambule de la revendication 1.

Aussi les inventeurs se sont donnés comme objectif de proposer un nouvel adaptateur plus résistant aux chocs, lors de l'utilisation de l'ensemble roulant sur des routes en mauvais état, tout en maintenant à un haut niveau les performances de l'ensemble roulant en matière de tenue de route, et en particulier de poussée de dérive.

L'invention a donc pour objet un adaptateur pour ensemble roulant selon la revendication 1 ayant un axe de rotation, l'ensemble roulant comprenant un pneumatique ayant deux bourrelets, une jante ayant deux rebords de jante, et, pour chaque bourrelet, ledit adaptateur assurant la jonction entre le bourrelet et la jante,
ledit adaptateur comprenant :
- une extrémité axialement intérieure comprenant un élément de renfort intérieur et destinée à être montée sur un rebord de jante,
- une extrémité axialement extérieure comprenant un élément de renfort extérieur et destinée à entrer en contact par une face axialement intérieure, sensiblement radiale, ou face d'appui, avec un bourrelet,
- un corps, connectant l'extrémité axialement extérieure avec l'extrémité axialement intérieure de manière à former une pièce unitaire, comprenant au moins une armature de renforcement principale assurant la liaison entre l'élément de renfort extérieur et l'élément de renfort intérieur, et comprenant un siège d'adaptateur sensiblement axial destiné à entrer en contact avec un bourrelet,
l'élément de renfort extérieur étant en totalité axialement extérieur à la face d'appui, l'élément de renfort extérieur étant une structure annulaire, appelée tringle, ayant une ligne moyenne et étant constituée par un empilage d'au moins trois couches constituées de fils métalliques et concentriques par rapport à la ligne moyenne,
une première couche ou âme comprenant au moins un fil métallique ayant un diamètre D1 au moins égal à 0.8 mm et au plus égal à 5 mm,
une deuxième couche étant constituée par un fil métallique ayant un diamètre D2 au plus égal à 1.4 fois le diamètre D1 et enroulé en hélice autour de l'âme en formant, avec la ligne moyenne de la tringle, un angle A2 au moins égal à 2° et au plus égal à 10°,
et une troisième couche étant constituée par un fil métallique ayant un diamètre D3 et enroulé en hélice autour de la deuxième couche en formant, avec la ligne moyenne de la tringle, un angle A3 au moins égal à 2° et au plus égal à 10° et de signe opposé à celui de l'angle A2.

Un adaptateur, élément de liaison entre le pneumatique et la jante, permet à un ensemble roulant, en roulage, d'avoir des déformations radiales suffisantes au niveau du bourrelet du pneumatique pour permettre la protection souhaitée vis-à-vis des chocs latéraux.

L'extrémité axialement extérieure de l'adaptateur délimite axialement une portion du corps d'adaptateur, appelé siège d'adaptateur, et destinée à recevoir un bourrelet de pneumatique. Le siège d'adaptateur assure la même fonction qu'un siège de jante, qui est la portion sensiblement axiale d'un rebord de jante. Selon la direction axiale, la face d'appui de l'extrémité axialement extérieure sert d'appui au bourrelet du pneumatique à l'instar d'un crochet de jante, qui est la portion sensiblement radiale d'un rebord de jante. Le pneumatique est alors immobilisé axialement par la pression de gonflage, et est plaqué contre la face d'appui de cette extrémité axialement extérieure, comme dans le cas usuel d'un bourrelet de pneumatique appliqué contre un crochet de jante.

L'extrémité axialement intérieure de l'adaptateur pourrait être dénommée « bourrelet d'adaptateur » puisqu'elle est destinée à accrocher l'adaptateur sur le rebord d'une jante, comme dans le cas usuel d'un bourrelet de pneumatique appuyé sur un rebord de jante.

Ainsi, au cours de son usage, le pneumatique est pratiquement immobilisé axialement par rapport à la jante. Plus précisément les bourrelets du pneumatique sont immobilisés axialement par rapport à la jante, comme pour un ensemble roulant classique dans lequel les bourrelets du pneumatique sont montés directement sur les rebords de jante. En revanche, les bourrelets du pneumatique ne sont pas immobilisés radialement par rapport à la jante. Plus précisément les bourrelets du pneumatique ont une possibilité de déplacement radial par rapport à la jante. En roulage standard, la déformation axiale de l'adaptateur est négligeable par rapport à sa déformation radiale. En revanche, lors d'un choc, la déformation axiale de l'adaptateur peut être importante, ce qui contribue à réduire les efforts mécaniques sur l'ensemble roulant.

L'adaptateur selon l'invention se caractérise essentiellement par une extrémité axialement extérieure dont l'élément de renfort est, premièrement, disposé radialement à l'extérieur du siège d'adaptateur. Deuxièmement, l'élément de renfort extérieur de l'extrémité axialement extérieure est une structure annulaire, appelée tringle, ayant une ligne moyenne et étant constituée par un empilage d'au moins trois couches constituées de fils métalliques et concentriques par rapport à la ligne moyenne. Par définition, la ligne moyenne de la tringle est le lieu des barycentres des sections successives de la tringle, c'est-à-dire le lieu des centres des cercles dans le cas de sections circulaires. Une première couche ou âme de la tringle, radialement la plus intérieure, comprend au moins un fil métallique ayant un diamètre D1 au moins égal à 0.8 mm et au plus égal à 5 mm. Une deuxième couche de la tringle est constituée par un fil métallique ayant un diamètre D2 au plus égal à 1.4 fois le diamètre D1 et enroulé en hélice autour de l'âme en formant, avec la ligne moyenne de la tringle, un angle A2 au moins égal à 2° et au plus égal à 10°. Une troisième couche de la tringle est constituée par un fil métallique ayant un diamètre D3 et enroulé en hélice autour de la deuxième couche en formant, avec la ligne moyenne de la tringle, un angle A3 au moins égal à 2° et au plus égal à 10° et de signe opposé à celui de l'angle A2.

Ainsi chacune des deuxième et troisième couches de la tringle est réalisée par l'enroulement hélicoïdal d'un fil unique. Les enroulements hélicoïdaux des fils respectivement constitutifs des deuxième et troisième couches de la tringle sont réalisés selon des sens de rotation opposés et constituent ce qu'on appelle une torsade. La torsade a pour avantage de créer une cohésion naturelle et pérenne entre les fils, grâce à une orientation constante de la courbure d'hélice de chaque fil de couche par rapport à la ligne moyenne de la tringle.

En outre, pour une couche donnée, l'utilisation d'un fil unique permet de limiter la discontinuité de la couche à ses deux seules extrémités circonférentielles et facilite la fabrication de la structure annulaire de la tringle par simple aboutage des extrémités circonférentielles des couches.

Le principal avantage de l'adaptateur selon l'invention est d'améliorer la résistance mécanique de l'ensemble roulant, soumis à des usages routiers sévères, grâce à une plus grande déformabilité de l'adaptateur, et en particulier une plus grande déformabilité axiale. Cette déformabilité est obtenue grâce à l'optimisation de la flexibilité ou souplesse de l'extrémité axialement extérieure de l'adaptateur, et en particulier grâce à l'optimisation de la flexibilité de l'élément de renfort extérieur. Cette flexibilité est effectivement permise par une tringle en torsade qui est à la fois apte à se déformer en traction, en compression et en flexion.

Par ailleurs l'adaptateur selon l'invention présente l'avantage de diminuer de manière significative le niveau des efforts mécaniques transmis au châssis du véhicule, lors d'un choc, et de permettre ainsi d'alléger la caisse du véhicule. Enfin, l'adaptateur selon l'invention présente l'avantage d'avoir une architecture simple et d'être facile à monter sur l'ensemble roulant.

Selon un mode de réalisation préféré, l'âme de la tringle est constituée par un fil métallique unique. Ce fil métallique unique rectiligne sert de support pour l'enroulement hélicoïdal de la deuxième couche.

Encore préférentiellement, la troisième couche de la tringle est constituée par un fil métallique ayant un diamètre D3 égal au diamètre D2. Un diamètre identique pour les fils respectivement constitutifs des deuxième et troisième couche de la tringle permet l'utilisation d'un même type de fil pour les deuxième et troisième couches, d'où une simplification de fabrication. En outre, cela permet de construire des tringles ayant des formules d'assemblages usuelles.

Les angles A2 et A3 formés respectivement par les fils métalliques constitutifs des deuxième et troisième couches de la tringle sont au moins égaux à 3° et au plus égaux à 8°. Cette plage d'angles, pour l'angle de chaque hélice de la torsade, permet d'obtenir une courbure de l'hélice proche de la courbure de la ligne moyenne de la tringle. En deçà de la limite inférieure de 3°, un angle trop petit confère à l'hélice un pas d'enroulement, autour de l'âme ou de la deuxième couche intérieure, trop long, ce qui dégrade la cohésion de la torsade, en particulier à l'intérieur de la courbure de la tringle, le fil de la couche concernée ayant tendance à prendre une trajectoire rectiligne à chaque tour de torsade. Au-delà de la limite supérieure de 8°, un angle trop grand, tout en permettant d'augmenter la cohésion de l'enroulement du fil sur la couche radialement intérieure, confère au fil une courbure excessive, très supérieure à la courbure de la ligne moyenne de la tringle, avec pour conséquence principale une réduction de la rigidité de flexion de la tringle.

La deuxième couche de la tringle comprenant, dans toute section radiale, N2 sections de fil unitaire de diamètre D2, le nombre N2 de sections de fil unitaire de diamètre D2 est au moins égal à 5. En effet, le nombre N2 de sections de fil unitaire de la deuxième couche de la tringle dépend du rapport entre le diamètre de l'enroulement et le diamètre du fil enroulé. Lorsque le diamètre D1 de l'âme diminue et se rapproche de 0.7 fois la valeur du diamètre D2 du fil de la deuxième couche, le nombre N2 de sections du fil unitaire au niveau de la deuxième couche diminue et tend vers 5.

La deuxième couche de la tringle comprenant, dans toute section radiale, N2 sections de fil unitaire de diamètre D2, et la troisième couche de la tringle comprenant, dans toute section radiale, N3 sections de fil unitaire de diamètre D3, le nombre N3 de sections de fil unitaire de diamètre D3 est au moins égal au nombre N2+6 de sections de fil unitaire de diamètre D2. Le nombre de sections de fil unitaire augmente au minimum de 6 au passage d'une couche à la couche immédiatement radialement extérieure, quand les diamètres des fils de chaque couche sont égaux. Cet accroissement permet d'atteindre un nombre suffisant de sections de fil unitaire en 3 couches, par exemple au minimum 19 sections de fil unitaire avec une âme à fil unique dite âme mono-filamentaire, pour obtenir la résistance nécessaire de la tringle.

Le diamètre D1 du fil métallique constitutif de l'âme de la tringle est avantageusement au moins égal à 1.2 mm et au plus égal à 4.5 mm. En deçà d'une valeur minimale de 1.2 mm, la section du fil est trop faible pour garantir une rigidité du fil, et donc de la tringle, suffisante, impliquant une rigidité insuffisante de l'adaptateur, pouvant entraîner des difficultés de guidage de l'ensemble roulant. Au-delà d'une valeur maximale de 4.5 mm, la section du fil est trop grande pour garantir une souplesse du fil, et donc de la tringle, suffisante, impliquant une souplesse de l'adaptateur insuffisante pour absorber d'éventuels chocs sur l'extrémité axialement extérieur de l'adaptateur. Il est à noter que, pour un fil métallique à base d'acier au carbone renforcé par écrouissage, la résistance à la rupture du fil augmente lorsque le diamètre du fil diminue.

Les fils métalliques constitutifs des première, deuxième et troisième couche de la tringle étant en acier et ayant une résistance à rupture Rm, la résistance à rupture Rm d'un fil en acier est au moins égal à 1000 MPa et au plus égal à 3000 MPa, de préférence au moins égal à 1400 MPa et au plus égal à 2800 MPa. La résistance à rupture d'un fil en acier écroui atteint généralement un niveau très supérieur à celui obtenu avec tout autre matériau susceptible d'être utilisé pour les fils constitutifs de la tringle. Un acier permettant d'atteindre un tel niveau de résistance à rupture des fils garantit en outre une flexibilité élastique de la tringle, c'est-à-dire une flexibilité réversible de la tringle. La réversibilité de la déformation en flexion de la tringle soumise à un choc subsiste au cours du temps, malgré une déformation croissante de la tringle. La résistance à rupture de l'acier peut être augmentée notamment par des choix adaptés relatifs à sa composition chimique et à son degré d'écrouissage.

La tringle ayant une section radiale circulaire de diamètre D_{S}, le diamètre D_{S} de la section radiale circulaire de la tringle est au moins égal à 4 mm et au plus égal à 25 mm, de préférence au moins égal à 6 mm et au plus égal à 21 mm. L'accroissement du diamètre D_{S} de la tringle, donc de la section radiale de la tringle, permet d'introduire un plus grand nombre de fils et, par conséquent, d'atteindre le niveau de rigidité nécessaire pour garantir la sécurité et le bon fonctionnement de l'ensemble roulant. La possibilité d'assembler un nombre croissant de fils dont le diamètre est ajustable par couche est un degré de liberté intéressant en terme de conception, en particulier lorsque le diamètre D_{S} de la tringle est limité par des contraintes de dimensionnement de l'extenseur.

Selon un premier mode de réalisation de l'invention, le corps comprend un renfort annulaire de siège radialement intérieur au siège d'adaptateur. Mais ce renfort annulaire de siège n'est pas obligatoire.

Le renfort annulaire de siège a avantageusement un module de compression supérieur ou égal à 1 GPa, et de préférence supérieur à 4 GPa, et encore plus préférentiellement supérieur à 10 GPa.

Le renfort annulaire de siège comprend également avantageusement au moins un élément de renforcement enrobé par un matériau polymérique.

Selon une première variante du premier mode de réalisation, l'élément de renforcement du renfort annulaire de siège comprend un matériau métallique, tel que l'acier. Le plus souvent, l'élément de renforcement est alors constitué par une couche ou par un empilage de couches de câbles métalliques, qui sont des assemblages de fils métalliques, lesdits câbles métalliques étant enrobés par un matériau polymérique et le plus souvent élastomérique.

Selon une deuxième variante du premier mode de réalisation, l'élément de renforcement du renfort annulaire de siège comprend un matériau textile, tels qu'un polyamide aliphatique ou nylon, un polyamide aromatique ou aramide, un polyester tel que le polyéthylène-téréphtalate (PET) ou le polyéthylène-naphténate (PEN) ou toute combinaison des matériaux précédemment cités. Le plus souvent, l'élément de renforcement est constitué par une couche ou par un empilage de couches de renforts textiles, qui sont des assemblages de filés textiles, lesdits renforts textiles étant enrobés par un matériau polymérique et le plus souvent élastomérique.

Selon une troisième variante du premier mode de réalisation, l'élément de renforcement du renfort annulaire de siège comprend des fibres de verre enrobées dans un matériau polymérique.

Selon d'autres variantes du premier mode de réalisation, l'élément de renforcement du renfort annulaire de siège peut également comprendre, à titre d'exemples et façon non exhaustive :
- des fibres de carbone,
- des fibres textiles autres que celles précédemment citées: fibres cellulosiques telles que la rayonne, des fibres naturelles à base de coton, lin, chanvre,
- ainsi que toute combinaison de ces fibres.

Les matériaux polymériques pouvant être utilisés pour l'enrobage de l'élément de renforcement du renfort de siège sont, par exemple et de façon non exhaustive:
- des élastomères saturés ou insaturés, comprenant éventuellement des blocs thermoplastiques (élastomères thermoplastiques ou TPE),
- des matériaux thermoplastiques,
- des matériaux thermodurcissables.

Selon une variante préférée du premier mode de réalisation, le renfort annulaire de siège est un matériau composite à base de fibres de verre enrobées dans une matrice en matériau thermoplastique. Dans ce cas, les fibres de verre constituent l'élément de renforcement du renfort annulaire de siège et le matériau d'enrobage est le matériau thermoplastique.

Le renfort annulaire de siège a avantageusement une largeur axiale au moins égale à 30% et au plus égale à 150% de la largeur axiale du bourrelet du pneumatique, et de préférence au moins égale à 40% et au plus égale à 110% de la largeur axiale du bourrelet du pneumatique.

Le renfort annulaire de siège peut encore avantageusement avoir une épaisseur radiale moyenne au moins égale à 0.3 mm et au plus égale à 20 mm, de préférence comprise entre 0.5 mm et 10 mm. Cette épaisseur radiale est fonction de la dimension du pneumatique. Pour un pneumatique tourisme, l'épaisseur radiale est de préférence comprise entre 0.5 mm et 10 mm.

Lorsque l'élément de renforcement du renfort annulaire de siège est constitué par un empilage de couches de renforts, le renfort annulaire de siège a de préférence une largeur axiale au moins égale à 5 mm et au plus égale à 25 mm, et une épaisseur radiale au moins égale à 0.1 mm et au plus égale à 4 mm.

Chaque couche de renforts de l'empilage de couches de renforts a une largeur axiale au moins égale à 1 mm et au plus égale à 25 mm, et une épaisseur radiale, au moins égale à 0,1mm et au plus égale à 2 mm. Les largeurs axiales et les épaisseurs radiales des différentes couches de renforts ne sont pas nécessairement identiques.

De préférence, le renfort annulaire de siège peut être disposé, à l'intérieur du corps d'adaptateur, radialement à l'extérieur ou radialement à l'intérieur de l'armature de renforcement principale du corps d'adaptateur, ou entre les couches de ladite armature de renforcement principale, celle-ci comprenant le plus souvent deux couches.

Selon un deuxième mode de réalisation de l'invention, l'armature de renforcement principale du corps comprend une superposition radiale d'au moins deux couches de renforts, lesdits renforts étant parallèles entre eux dans une même couche et croisés entre eux d'une couche à la suivante et chacune des couches de l'armature de renforcement principale du corps comprend des renforts formant, avec une direction circonférentielle du pneumatique, un angle au moins égal à 30°, et enrobés par un matériau polymérique ayant un module d'élasticité à 10% d'allongement au plus égal à 70 MPa. Le deuxième mode de réalisation de l'invention diffère essentiellement du premier mode de réalisation par l'absence d'un renfort annulaire de siège.

Dans ce deuxième mode de réalisation, le fait que la tringle soit positionnée axialement intégralement à l'extérieur de la face d'appui, donc à l'extérieur du corps d'adaptateur, garantit que la tringle ne rigidifie pas axialement le corps et ne limite donc pas sa déformabilité axiale.

De plus, l'armature de renforcement principale du corps comprend une superposition radiale d'au moins deux couches de renforts, lesdits renforts étant parallèles entre eux dans une même couche et croisés entre eux d'une couche à la suivante , et chaque couche est constituée par des renforts formant, avec la direction circonférentielle, un angle au moins égal à 30°, ces renforts étant enrobés dans un matériau polymérique ayant un module d'élasticité à 10% d'allongement au plus égal à 70 MPa.

L'armature de renforcement principale est en effet constituée par l'enroulement d'une couche de renforts respectivement autour de l'élément de renfort extérieur et de l'élément de renfort intérieur. Il en résulte une superposition radiale d'au moins deux couches dans le corps : deux couches s'il n'a pas de superposition des extrémités de l'enroulement, 3 couches s'il y a superposition des extrémités de l'enroulement. L'angle formé par les renforts d'une couche, avec la direction circonférentielle, est donné en valeur absolue, sachant que, compte tenu du principe de fabrication retenu pour l'armature de renforcement principale, le signe de l'angle s'inverse lors du passage d'une couche à la suivante.

Le fait d'avoir une valeur seuil minimale pour l'angle des renforts garantit une rigidité axiale minimale de l'adaptateur, nécessaire à la rigidité de dérive attendue pour l'ensemble roulant. Un module d'élasticité à 10% d'allongement pour le matériau polymérique d'enrobage inférieur à une valeur seuil maximale garantit la déformabilité axiale de l'adaptateur.

La combinaison des caractéristiques du deuxième mode de réalisation présente l'avantage d'avoir un adaptateur suffisamment souple axialement pour pouvoir être monté facilement, avec une bonne capacité à absorber de grandes déformations en cas de chocs pincement.

L'armature de renforcement principale dudit corps d'adaptateur a généralement un module au moins égal à 4 GPa. Elle peut comprendre des renforts en tous types de matériau métallique ou textile tels que ceux précédemment cités pour le renfort annulaire de siège.

La largeur axiale du corps d'adaptateur selon l'invention est généralement au moins égale à 2.54 cm et au plus égale à 8 cm, et de préférence au moins égale à 3.17 cm et au plus égale à 5.10 cm.

De préférence, l'adaptateur peut être disposé d'un seul côté de la jante, et encore préférentiellement du côté extérieur du véhicule. Dans ce cas, la jante possède alors une forme géométrique dissymétrique de manière à s'adapter à la présence de l'adaptateur présent sur un seul côté.

Lorsque l'ensemble roulant comprend deux adaptateurs, ces derniers peuvent être symétriques ou non symétriques. La notion de symétrie ou de dissymétrie de l'adaptateur est définie par la largeur axiale du corps de l'adaptateur. Deux adaptateurs sont dissymétriques lorsque le corps de l'un d'entre eux a une largeur axiale plus grande que celle de l'autre.

De préférence, l'ensemble roulant selon l'invention, comprend un premier et un second adaptateur ayant chacun des corps de largeurs différentes ou identiques.

L'invention a également pour objet un ensemble roulant comprenant, pour chaque bourrelet du pneumatique, un adaptateur selon l'un quelconque des modes de réalisation précédemment décrits.

L'invention est décrite à l'aide des figures 1 à 3 suivantes, schématiques et non nécessairement à l'échelle:
- figure 1 : coupe radiale d'un adaptateur non monté, selon une première variante de l'invention avec renfort annulaire de siège,
- figure 2 : coupe radiale d'un adaptateur non monté, selon une seconde variante de l'invention sans renfort annulaire de siège,
- figure 3 : coupe radiale d'un ensemble roulant, comprenant deux adaptateurs selon la seconde variante de l'invention sans renfort annulaire de siège.

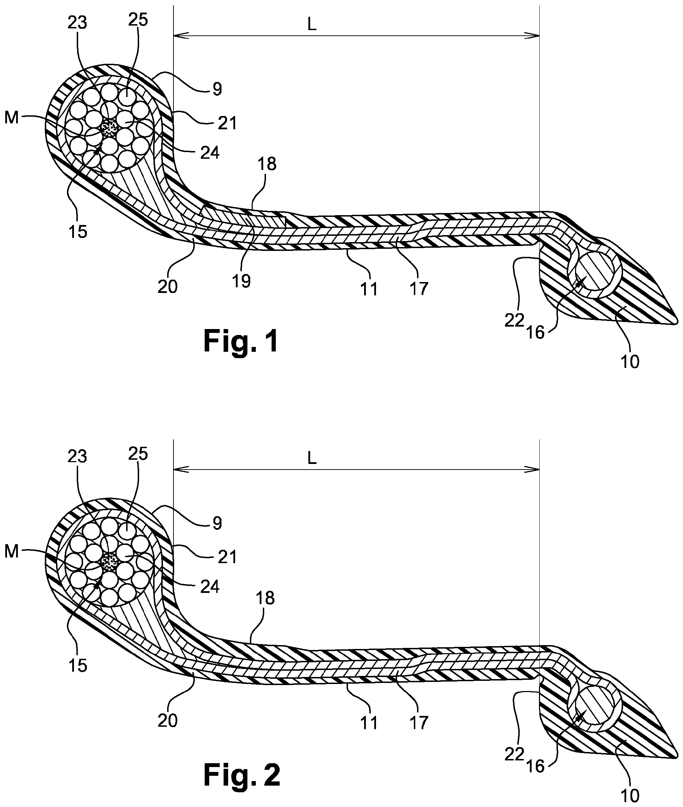

La figure 1 représente un adaptateur non monté sur jante, selon une première variante de l'invention avec renfort annulaire de siège. Cet adaptateur comprend une extrémité axialement extérieure 9 comprenant un élément de renfort extérieur 15, une extrémité axialement intérieure 10 comprenant un élément de renfort intérieur 16, et un corps 11 comprenant une armature de renforcement principale 17. L'armature de renforcement principale 17 est constituée par une seule couche de renforcement qui s'enroule respectivement autour de l'élément de renfort intérieur 16 de l'extrémité axialement intérieure 10 et autour de l'élément de renfort extérieur 15 de l'extrémité axialement extérieure 9. Au niveau du corps 11, les portions aller et retour de ladite couche de renforcement constitue ainsi un empilement sensiblement radial d'au moins deux couches de renforcement. L'armature de renforcement principale 17 est enveloppée par une couche de matériau élastomérique 20. Le corps 11 comprend en outre un siège d'adaptateur 18 destiné à entrer en contact avec un bourrelet de pneumatique. Le corps 11 a une largeur axiale L, mesurée entre la face axialement intérieure 21 de l'extrémité axialement extérieure 9 et la face axialement extérieure 26 de l'extrémité axialement intérieure 10. Dans ce premier mode de réalisation de l'invention, le corps 11 comprend également un renfort annulaire de siège 19, radialement extérieur à l'armature de renforcement principale 17 et axialement intérieur à l'extrémité axialement extérieure 9.

Sur la figure 1, l'élément de renfort extérieur 15 est une structure annulaire, appelée tringle, ayant une ligne moyenne M et étant constituée par un empilage de trois couches (23, 24, 25) constituées de fils métalliques et concentriques par rapport à la ligne moyenne M. La première couche ou âme 23, la plus radialement intérieure, comprend un fil métallique ayant un diamètre D1 au moins égal à 0.8 mm et au plus égal à 5 mm. La deuxième couche 24 est constituée par un fil métallique ayant un diamètre D2 égal, dans le cas représenté, au diamètre D1, et enroulé en hélice autour de l'âme 23. en formant, avec la ligne moyenne M de la tringle 15, un angle A2 (non représenté) au moins égal à 2° et au plus égal à 10° La troisième couche 25 est constituée par un fil métallique ayant un diamètre D3 égal, dans le cas représenté, au diamètre D2 et enroulé en hélice autour de la deuxième couche 24 en formant, avec la ligne moyenne M de la tringle 15, un angle A3 (non représenté) au moins égal à 2° et au plus égal à 10° et de signe opposé à celui de l'angle A2. Dans le cas représenté, l'âme est constituée par un fil métallique unique, la deuxième couche 24 a un nombre N2 de sections de fil unitaire égal à 6 et la troisième couche 25 a un nombre N3 de sections de fil unitaire égal à 12.

La figure 2 diffère de la figure 1 uniquement par la suppression du renfort annulaire de siège (19).

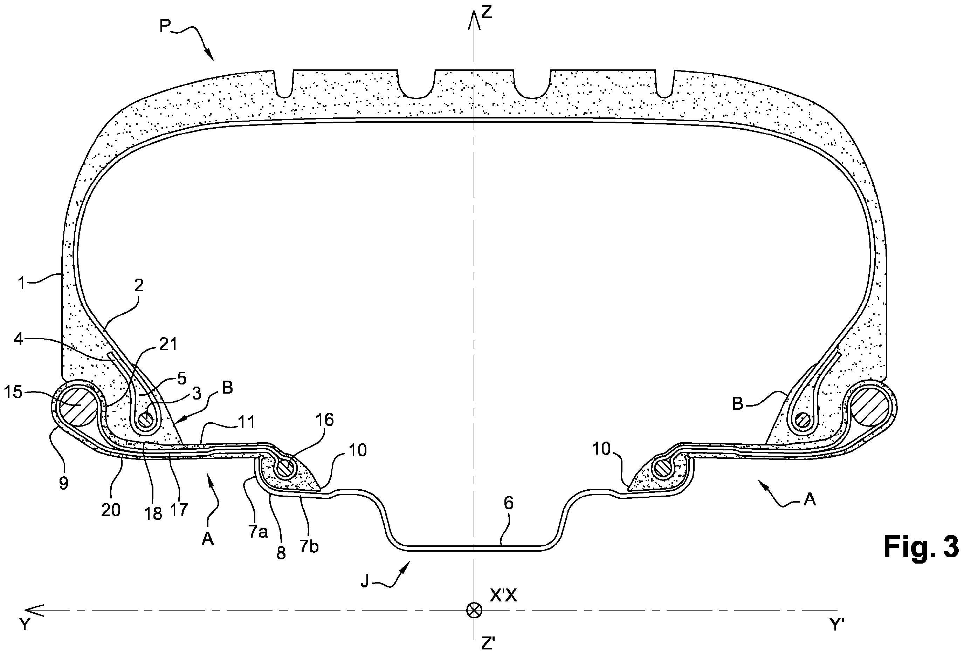

La figure 3 présente une coupe radiale, dans un plan YZ, d'un ensemble roulant comprenant un pneumatique P, une jante J et, pour chaque bourrelet B, un adaptateur A assurant la jonction entre le bourrelet B et la jante J. Le pneumatique P comprend une bande de roulement (non référencée) prolongée radialement vers l'intérieur par deux flancs 1, eux-mêmes prolongés radialement vers l'intérieur par deux bourrelets B. Dans chaque bourrelet B, l'armature de carcasse 2 s'enroule autour d'un élément de renforcement circonférentiel ou tringle 3, pour former un retournement 4 séparé de l'armature de carcasse 2 par un élément de remplissage 5. La jante J comprend, dans une portion médiane, une gorge de montage 6, destinée à faciliter le montage des bourrelets B du pneumatique P, et, à ses extrémités axiales, deux rebords de jante 8 comprenant chacun une portion sensiblement radiale ou crochet de jante 7a et une portion sensiblement axiale ou siège de jante 7b. L'adaptateur A comprend une extrémité axialement intérieure 10 comprenant un élément de renfort intérieur 16 et destinée à être montée sur un rebord de jante 8, une extrémité axialement extérieure 9 comprenant un élément de renfort extérieur 15 et destinée à entrer en contact par une face axialement intérieure, sensiblement radiale, ou face d'appui 21, avec un bourrelet B, et enfin un corps 11, connectant l'extrémité axialement extérieure 9 avec l'extrémité axialement intérieure 10 de manière à former une pièce unitaire, comprenant au moins une armature de renforcement principale 17 assurant la liaison entre l'élément de renfort extérieur 15 et l'élément de renfort intérieur 16, et comprenant un siège d'adaptateur 18 sensiblement axial destiné à entrer en contact avec un bourrelet B.

A titre d'illustration, deux exemples de tringles ont été évalués comme élément de renfort extérieur 15 d'adaptateur.

Le premier exemple est une tringle constituée par 3 couches de renforts en acier. La première couche ou âme 23, la plus radialement intérieure, comprend un fil métallique ayant un diamètre D1 égal à 3 mm. La deuxième couche 24 est constituée par un fil métallique ayant un diamètre D2 égal à 1.75 mm et enroulé en hélice autour de l'âme 23. en formant, avec la ligne moyenne M de la tringle 15, un angle A2 (non représenté) égal à 6.2°. La troisième couche 25 est constituée par un fil métallique ayant un diamètre D3 égal au diamètre D2, c'est-à-dire à 1.75 mm, et enroulé en hélice autour de la deuxième couche 24 en formant, avec la ligne moyenne M de la tringle 15, un angle A3 (non représenté) égal à 8.8° et de signe opposé à celui de l'angle A2. Dans le cas présent, la deuxième couche 24 a un nombre N2 de sections de fil unitaire égal à 8 et la troisième couche 25 a un nombre N3 de sections de fil unitaire égal à 14. La formule de cette tringle est donc 1^{∗}3 mm + 8^{∗}1.75 mm + 14^{∗}1.75 mm.

Le second exemple, correspondant au cas illustré par les figures 2 et 3, est une tringle constituée par 3 couches de renforts en acier. La première couche ou âme 23, la plus radialement intérieure, comprend un fil métallique ayant un diamètre D1 égal à 2 mm. La deuxième couche 24 est constituée par un fil métallique ayant un diamètre D2 égal au diamètre D1, c'est-à-dire à 2 mm et enroulé en hélice autour de l'âme 23. en formant, avec la ligne moyenne M de la tringle 15, un angle A2 (non représenté) égal à 3,3°. La troisième couche 25 est constituée par un fil métallique ayant un diamètre D3 égal au diamètre D2, c'est-à-dire à 2 mm, et enroulé en hélice autour de la deuxième couche 24 en formant, avec la ligne moyenne M de la tringle 15, un angle A3 (non représenté) égal à 6,6° et de signe opposé à celui de l'angle A2. Dans le cas présent, la deuxième couche 24 a un nombre N2 de sections de fil unitaire égal à 6 et la troisième couche 25 a un nombre N3 de sections de fil unitaire égal à 12. La formule de cette tringle est donc (1 + 6 + 12)^{∗}2 mm.

Le premier exemple de tringle de formule (1^{∗}3 mm + 8^{∗}1.75 mm + 14^{∗}1.75 mm) a été intégré dans un adaptateur pour un pneumatique de dimension 225/45R17 monté sur une roue 4.5B16. En outre, cette tringle a une forme torique dont le diamètre intérieur est égal à 471 mm et a une masse égale à 713 g. Cet ensemble roulant S1, comprenant deux adaptateurs (un adaptateur par bourrelet), a été comparé d'une part à un ensemble roulant de référence R1 standard, sans adaptateur, comprenant un pneumatique de dimension 225/45R17 monté sur une roue 7.5J17, et d'autre part à un ensemble roulant E1 comprenant un pneumatique de dimension 225/45R17 monté sur une roue 7.5J17 et deux adaptateurs (un adaptateur par bourrelet). Chaque adaptateur de l'ensemble roulant E1 a pour élément de renfort extérieur une tringle pleine dont la section radiale est un disque de diamètre 10 mm et dont le matériau constitutif est un composite verre-résine, c'est-à-dire comprenant des fibres de verre dans une matrice en résine.

Pour chacun des trois ensembles roulants S1, R1 et E1 précédemment décrits, ont été mesurées la rigidité de dérive DZ et la rigidité radiale KZ. La rigidité de dérive DZ, exprimée en daN/°, est la force axiale à appliquer au pneumatique pour obtenir une rotation de 1° de l'ensemble roulant autour d'un axe radial. Dans le cas présent, la rigidité de dérive DZ est mesurée pour un pneumatique gonflé à une pression égale à 2.5 bar et écrasé sous une charge radiale Z égale à 4286 N. La rigidité radiale KZ, exprimée en daN/mm, est la force radiale à appliquer au pneumatique pour obtenir un déplacement radial de 1 mm. Dans le cas présent, la rigidité radiale KZ est mesurée pour un pneumatique gonflé à une pression P égale à 2.5 bar, sa charge nominale Z, au sens de la norme ETRTO (European Tyre and Rim Technical Organisation), étant égale à 3620 daN. Dans le tableau ci-dessous, les rigidités de dérive DZ et radiale KZ des pneumatiques des ensembles roulants comparés S1, R1 et E1, sont exprimées en valeurs relatives par rapport à l'ensemble roulant de référence R1 pris comme base 100.

En outre, les trois ensembles roulants S1, R1 et E1 ont été soumis à un test en « Pinch Shock », c'est-à-dire à un test de choc pincement, suivi d'un test d'endurance. Un test en « Pinch Shock » consiste à soumettre, à plusieurs reprises, le pneumatique, gonflé à une pression P égale à 2.3 bar, écrasé sous une charge Z égale à 500 daN et roulant à 45km/h, à un choc contre un trottoir ayant une hauteur de 110 mm, selon une direction formant un angle égal à 70° par rapport à la direction de roulage. A l'issue de ce test en « Pinch Shock », est réalisé un test en endurance, dans lequel le pneumatique, roulant à 30 km/h, est soumis à des angles de dérive variant entre -6° et +6° autour de la direction radiale. L'intégrité du pneumatique est alors examinée à l'issue de cette séquence de deux tests.

Le tableau 1 ci-dessous présentent les résultats de rigidités de dérive DZ, de rigidités radiales KZ et de test d'endurance en dérive, suite à test en « Pinch Shock », pour les ensembles roulants R1, E1 et S1 pour un pneumatique de dimension 225/45R17 :

**Tableau 1 : Rigidités de dérive et radiale, et endurance en 225/45R17**

| Ensemble roulant | Rigidité de dérive DZ | Rigidité radiale KZ | Tenue en endurance dérive après test |
|---|---|---|---|
| | (Z=4826N, P= 2.5bar) | (Z=3620N, P= 2.5bar) | « Pinch Shock » |
| R1 : Pneu 225/45R17 + roue 7.5J17 | 100% | 100% | NA (crevaison) |
| E1 : Pneu 225/45R17 + 2 | 96% | 98% | NOK (rupture tringle) |
| adaptateurs avec tringle extérieure en CVR (diam. ext 10 mm) + roue 4.5B16 | | | |
| S1 : Pneu 225/45R17 + 2 adaptateurs avec tringle extérieure de formule (1^{∗}3mm + 8^{∗}1.75mm + 14^{∗}1.75mm - diam. ext 10mm) + roue 4.5B16 | 97% | 98% | OK |

Le tableau 1 montre que les deux ensembles roulants E1 et S1 avec adaptateurs ont des rigidités de dérive DZ et radiale KZ sensiblement du même niveau que celles de l'ensemble roulant de référence R1 sans adaptateur. En revanche, l'ensemble roulant S1 est plus performant que l'ensemble roulant E1, en test d'endurance après test en « Pinch Shock », car la tringle d'adaptateur reste intègre pour S1 alors que la tringle d'adaptateur est rompue pour E1.

Le tableau 2 ci-dessous présente le même type de résultats pour trois ensembles roulants R2, S21 et S22 dans le cas d'un pneumatique de dimension 245/40R18. L'ensemble roulant de référence R2 standard, sans adaptateur, comprend un pneumatique de dimension 245/40R18 monté sur une roue 8J17. L'ensemble roulant S21 comprend un pneumatique de dimension 245/40R18 monté sur une roue 4.5J16 et deux adaptateurs (un adaptateur par bourrelet). Chaque adaptateur de l'ensemble roulant S21 a pour élément de renfort extérieur une tringle de formule (1^{∗}3 mm + 8^{∗}1.75 mm + 14^{∗}1.75 mm) dont la section radiale circulaire a un diamètre égal à 10 mm. L'ensemble roulant S22 comprend un pneumatique de dimension 245/40R18 monté sur une roue 4.5J16 et deux adaptateurs (un adaptateur par bourrelet). Chaque adaptateur de l'ensemble roulant S22 a pour élément de renfort extérieur une tringle de formule (1 + 6 + 12)^{∗}2 mm dont la section radiale circulaire à un diamètre de 10 mm. En outre, cette tringle a une forme torique dont le diamètre intérieur est égal à 471 mm et a une masse égale à 707 g.

Le tableau 2 ci-dessous présentent les résultats de rigidités de dérive DZ, de rigidités radiales KZ et de test d'endurance en dérive, suite à test en « Pinch Shock », pour les ensembles roulants R2, S21 et S22 pour un pneumatique de dimension 245/40R18:

**Tableau 2 : Rigidités de dérive et radiale, et endurance en 245/40R18**

| Ensemble roulant | Rigidité de dérive DZ | Rigidité radiale KZ | Tenue en endurance dérive après test |
|---|---|---|---|
| | (Z=5101N, P= 2.5bar) | (Z=3826N, P= 2.5bar) | « Pinch Shock » |
| R2 : Pneu 245/40R18 + roue 8J17 | 100% | 100% | NA (crevaison) |
| S21 : Pneu 245/40R18 + 2 | 99% | 99% | OK |
| adaptateurs avec tringle extérieure de formule (1^{∗}3mm + 8^{∗}1.75mm + 14^{∗}1.75mm - diam. ext 10mm) + roue 4.5J16 | | | |
| S22 : Pneu 245/40R18 + 2 | 98% | 99% | OK |
| adaptateurs avec tringle extérieure de formule (1+6+12)^{∗}2 mm avec diam. ext 10mm) + roue 4.5J16 | | | |

Le tableau 2 montre que les deux ensembles roulants S21 et S22 avec adaptateurs ont des rigidités de dérive DZ et radiale KZ sensiblement du même niveau que celles de l'ensemble roulant de référence R2 sans adaptateur. De plus les deux ensembles roulants S21 et S22 satisfont tous deux le test d'endurance après test en « Pinch Shock ».

## Revendications

1. Adaptateur (A) pour ensemble roulant ayant un axe de rotation (YY'),
l'ensemble roulant comprenant :
- un pneumatique (P) ayant deux bourrelets (B),
- une jante (J) ayant deux rebords de jante (8),
- pour chaque bourrelet (B), ledit adaptateur (A) assurant la jonction entre le bourrelet (B) et la jante (J),
ledit adaptateur (A) comprenant :
- une extrémité axialement intérieure (10) comprenant un élément de renfort intérieur (16) et destinée à être montée sur un rebord de jante (8),
- une extrémité axialement extérieure (9) comprenant un élément de renfort extérieur (15) et destinée à entrer en contact par une face axialement intérieure, sensiblement radiale, ou face d'appui (21), avec un bourrelet (B),
- un corps (11), connectant l'extrémité axialement extérieure (9) avec l'extrémité axialement intérieure (10) de manière à former une pièce unitaire, comprenant au moins une armature de renforcement principale (17) assurant la liaison entre l'élément de renfort extérieur (15) et l'élément de renfort intérieur (16), et comprenant un siège d'adaptateur (18) sensiblement axial destiné à entrer en contact avec un bourrelet (B),
- l'élément de renfort extérieur (15) étant en totalité axialement extérieur à la face d'appui (21), et l'élément de renfort extérieur (15) étant une structure annulaire, appelée tringle, ayant une ligne moyenne (M) **caractérisé en ce que** la tringle est constituée par un empilage d'au moins trois couches (23, 24, 25) constituées de fils métalliques et concentriques par rapport à la ligne moyenne (M), **en ce qu'**une première couche ou âme (23) comprend au moins un fil métallique ayant un diamètre D1 au moins égal à 0.8 mm et au plus égal à 5 mm, **en ce qu'**une deuxième couche (24) est constituée par un fil métallique ayant un diamètre D2 au plus égal à 1.4 fois le diamètre D1 et enroulé en hélice autour de l'âme (23) en formant, avec la ligne moyenne (M) de la tringle (15), un angle A2 au moins égal à 2° et au plus égal à 10° **et en ce qu'**une troisième couche (25) est constituée par un fil métallique ayant un diamètre D3 et enroulé en hélice autour de la deuxième couche (24) en formant, avec la ligne moyenne (M) de la tringle (15), un angle A3 au moins égal à 2° et au plus égal à 10° et de signe opposé à celui de l'angle A2.

2. Adaptateur selon la revendication 1, **dans lequel** l'âme (23) de la tringle (15) est constituée par un fil métallique unique.

3. Adaptateur selon l'une des deux revendications 1 ou 2, **dans lequel** la troisième couche (25) est constituée par un fil métallique ayant un diamètre D3 égal au diamètre D2

4. Adaptateur selon l'une quelconque des revendications 1 à 3, **dans lequel** les angles A2 et A3 formés respectivement par les fils métalliques constitutifs des deuxième et troisième couches (24, 25) de la tringle (15) sont au moins égaux à 3° et au plus égaux à 8°.

5. Adaptateur selon l'une quelconque des revendications 1 à 4, la deuxième couche (24) de la tringle (15) comprenant, dans toute section radiale, N2 sections de fil unitaire de diamètre D2, **dans lequel** le nombre N2 de sections de fil unitaire de diamètre D2 est au moins égal à 5.

6. Adaptateur selon l'une quelconque des revendications 1 à 5, la deuxième couche (24) de la tringle (15) comprenant, dans toute section radiale, N2 sections de fil unitaire de diamètre D2, et la troisième couche (24) de la tringle (15) comprenant, dans toute section radiale, N3 sections de fil unitaire de diamètre D3, **dans lequel** le nombre N3 de sections de fil unitaire de diamètre D3 est au moins égal au nombre N2+6 de sections de fil unitaire de diamètre D2.

7. Adaptateur selon l'une quelconque des revendications 1 à 6, **dans lequel** le diamètre D1 du fil métallique constitutif de l'âme (23) de la tringle (15) est au moins égal à 1.2 mm et au plus égal à 4.5 mm.

8. Adaptateur selon l'une quelconque des revendications 1 à 7, les fils métalliques constitutifs des première, deuxième et troisième couche (23, 24, 25) de la tringle (15) étant en acier et ayant une résistance à rupture Rm, **dans lequel** la résistance à rupture Rm d'un fil en acier est au moins égal à 1000 MPa et au plus égal à 3000 MPa, de préférence au moins égal à 1400 MPa et au plus égal à 2800 MPa.

9. Adaptateur selon l'une quelconque des revendications 1 à 8, la tringle (15) ayant une section radiale circulaire de diamètre D_{S}, **dans lequel** le diamètre D_{S} de la section radiale circulaire de la tringle (15) est au moins égal à 4 mm et au plus égal à 25 mm, de préférence au moins égal à 6 mm et au plus égal à 21 mm.

10. Adaptateur selon l'une quelconque des revendications 1 à 9, **dans lequel** le corps (11) comprend un renfort annulaire de siège (19) axialement intérieur au siège d'adaptateur (18).

11. Adaptateur selon la revendication 10, **dans lequel** le renfort annulaire de siège (19) a un module de compression supérieur ou égal à 1 GPa, et de préférence supérieur à 4 GPa, et encore plus préférentiellement supérieur à 10 GPa.

12. Adaptateur selon l'une des revendications 10 ou 11, **dans lequel** le renfort annulaire de siège (19) comprend un élément de renforcement enrobé par un matériau polymérique.

13. Adaptateur selon la revendication 12, **dans lequel** l'élément de renforcement du renfort annulaire de siège (19) comprend un matériau métallique, tel que l'acier.

14. Adaptateur selon la revendication 12, **dans lequel** l'élément de renforcement du renfort annulaire de siège (19) comprend des fibres de verre enrobées dans un matériau polymérique.

15. Adaptateur selon l'une quelconque des revendications 1 à 9, **dans lequel** l'armature de renforcement principale (17) du corps (11) comprend une superposition radiale d'au moins deux couches de renforts, lesdits renforts étant parallèles entre eux dans une même couche et croisés entre eux d'une couche à la suivante **et en ce que** chacune des couches de l'armature de renforcement principale (17) du corps (11) comprend des renforts formant, avec une direction circonférentielle (XX') du pneumatique, un angle au moins égal à 30°, et enrobés par un matériau polymérique ayant un module d'élasticité à 10% d'allongement au plus égal à 70 MPa.

16. Ensemble roulant comprenant, pour chaque bourrelet (B) du pneumatique (P), un adaptateur (A) selon l'une quelconque des revendications 1 à 15.

## Patentansprüche

1. Adapter (A) für eine Fahreinheit, die eine Drehachse (YY') aufweist, wobei die Fahreinheit umfasst:
- einen Luftreifen (P) mit zwei Wülsten (B),
- eine Felge (J) mit zwei Felgenhörnern (8),
- wobei der Adapter (A) für jeden Wulst (B) die Verbindung zwischen dem Wulst (B) und der Felge (J) gewährleistet,
wobei der Adapter (A) umfasst:
- ein axial inneres Ende (10), das ein inneres Verstärkungselement (16) umfasst und dazu bestimmt ist, an einem Felgenhorn (8) angebracht zu werden,
- ein axial äußeres Ende (9), das ein äußeres Verstärkungselement (15) umfasst und dazu bestimmt ist, über eine axial innere, im Wesentlichen radiale Seite oder Auflageseite (21) mit einem Wulst (B) in Kontakt zu kommen,
- einen Körper (11), der das axial äußere Ende (9) mit dem axial inneren Ende (10) so verbindet, dass ein einteiliges Stück gebildet wird, der mindestens eine Hauptverstärkungsbewehrung (17) umfasst, welche die Verbindung zwischen dem äußeren Verstärkungselement (15) und dem inneren Verstärkungselement (16) gewährleistet, und der einen im Wesentlichen axialen Adaptersitz (18) umfasst, der dazu bestimmt ist, mit einem Wulst (B) in Kontakt zu kommen,
- wobei sich das äußere Verstärkungselement (15) vollständig axial außerhalb der Auflageseite (21) befindet und das äußere Verstärkungselement (15) eine ringförmige Struktur ist, Wulstkern genannt, die eine Mittellinie (M) aufweist,
**dadurch gekennzeichnet, dass** der Wulstkern aus einem Stapel aus mindestens drei Schichten (23, 24, 25) besteht, die aus Metalldrähten bestehen und konzentrisch in Bezug auf die Mittellinie (M) sind, dadurch, dass eine erste Schicht, oder Seele, (23) mindestens einen Metalldraht mit einem Durchmesser D1 von mindestens 0,8 mm und höchstens 5 mm umfasst, dadurch, dass eine zweite Schicht (24) aus einem Metalldraht mit einem Durchmesser D2, der höchstens gleich dem 1,4-Fachen des Durchmessers D1 ist, besteht, der schraubenlinienförmig um die Seele (23) gewickelt ist und dabei mit der Mittellinie (M) des Wulstkerns (15) einen Winkel A2 von mindestens 2° und höchstens 10° bildet, und dadurch, dass eine dritte Schicht (25) aus einem Metalldraht mit einem Durchmesser D3 besteht, der schraubenlinienförmig um die zweite Schicht (24) gewickelt ist und dabei mit der Mittellinie (M) des Wulstkerns (15) einen Winkel A3 von mindestens 2° und höchstens 10° bildet, dessen Vorzeichen zu dem des Winkels A2 entgegengesetzt ist.

2. Adapter nach Anspruch 1, wobei die Seele (23) des Wulstkerns (15) aus einem einzigen Metalldraht besteht.

3. Adapter nach einem der Ansprüche 1 oder 2, wobei die dritte Schicht (25) aus einem Metalldrahtmit einem Durchmesser D3 besteht, der gleich dem Durchmesser D2 ist.

4. Adapter nach einem der Ansprüche 1 bis 3, wobei die Winkel A2 und A3, die von den Metalldrähten gebildet werden, aus denen die zweite bzw. dritte Schicht (24, 25) des Wulstkerns (15) besteht, mindestens 3° und höchstens 8° betragen.

5. Adapter nach einem der Ansprüche 1 bis 4, wobei die zweite Schicht (24) des Wulstkerns (15) in jedem radialen Querschnitt N2 Einzeldrahtquerschnitte mit dem Durchmesser D2 umfasst, wobei die Anzahl N2 von Einzeldrahtquerschnitten mit dem Durchmesser D2 mindestens 5 beträgt.

6. Adapter nach einem der Ansprüche 1 bis 5, wobei die zweite Schicht (24) des Wulstkerns (15) in jedem radialen Querschnitt N2 Einzeldrahtquerschnitte mit dem Durchmesser D2 umfasst und die dritte Schicht (24) des Wulstkerns (15) in jedem radialen Querschnitt N3 Einzeldrahtquerschnitte mit dem Durchmesser D3 umfasst, wobei die Anzahl N3 von Einzeldrahtquerschnitten mit dem Durchmesser D3 mindestens gleich der Anzahl N2+6 von Einzeldrahtquerschnitten mit dem Durchmesser D2 ist.

7. Adapter nach einem der Ansprüche 1 bis 6, wobei der Durchmesser D1 des Einzeldrahtes, der Bestandteil der Seele (23) des Wulstkerns (15) ist, mindestens 1,2 mm und höchstens 4,5 mm beträgt.

8. Adapter nach einem der Ansprüche 1 bis 7, wobei die Metalldrähte, die Bestandteile der ersten, zweiten und dritten Schicht (23, 24, 25) des Wulstkerns (15) sind, aus Stahl bestehen und eine Bruchfestigkeit Rm aufweisen, wobei die Bruchfestigkeit Rm eines Drahtes aus Stahl mindestens 1000 MPa und höchstens 3000 MPa, vorzugsweise mindestens 1400 MPa und höchstens 2800 MPa beträgt.

9. Adapter nach einem der Ansprüche 1 bis 8, wobei der Wulstkern (15) einen kreisförmigen radialen Querschnitt mit einem Durchmesser D_{S} aufweist, wobei der Durchmesser D_{S} des kreisförmigen radialen Querschnitts des Wulstkerns (15) mindestens 4 mm und höchstens 25 mm, vorzugsweise mindestens 6 mm und höchstens 21 mm beträgt.

10. Adapter nach einem der Ansprüche 1 bis 9, wobei der Körper (11) eine ringförmige Sitzverstärkung (19) umfasst, die sich axial innerhalb des Adaptersitzes (18) befindet.

11. Adapter nach Anspruch 10, wobei die ringförmige Sitzverstärkung (19) einen Kompressionsmodul aufweist, der größer oder gleich 1 GPa und vorzugsweise größer als 4 GPa und noch stärker bevorzugt größer als 10 GPa ist.

12. Adapter nach einem der Ansprüche 10 oder 11, wobei die ringförmige Sitzverstärkung (19) ein Verstärkungselement umfasst, das mit einem Polymermaterial umhüllt ist.

13. Adapter nach Anspruch 12, wobei das Verstärkungselement der ringförmigen Sitzverstärkung (19) ein metallisches Material wie etwa Stahl umfasst.

14. Adapter nach Anspruch 12, wobei das Verstärkungselement der ringförmigen Sitzverstärkung (19) Glasfasern umfasst, die in ein Polymermaterial eingebettet sind.

15. Adapter nach einem der Ansprüche 1 bis 9, wobei die Hauptverstärkungsbewehrung (17) des Körpers (11) eine radiale Überlagerung mindestens zweier Schichten von Festigkeitsträgern umfasst, wobei die Festigkeitsträger in ein und derselben Schicht parallel zueinander sind und sich von einer Schicht zur folgenden überkreuzen, und dadurch, dass jede der Schichten der Hauptverstärkungsbewehrung (17) des Körpers (11) Festigkeitsträger umfasst, die mit einer Umfangsrichtung (XX') des Luftreifens einen Winkel von mindestens 30° bilden und mit einem Polymermaterial umhüllt sind, das einen Elastizitätsmodul bei 10 % Dehnung von höchstens 70 MPa aufweist.

16. Fahreinheit, welche für jeden Wulst (B) des Luftreifens (P) einen Adapter (A) nach einem der Ansprüche 1 bis 15 umfasst.

## Claims

1. Adapter (A) for a rolling assembly having an axis of rotation (YY'),
the rolling assembly comprising:
- a tyre (P) having two beads (B),
- a rim (J) having two rim bead seats (8),
- for each bead (B), the said adapter (A) providing the connection between the bead (B) and the rim (J),
the said adapter (A) comprising:
- an axially inner end (10) comprising an inner reinforcing element (16) and intended to be mounted on a rim bead seat (8),
- an axially outer end (9) comprising an outer reinforcing element (15) and intended to come into contact, via a substantially radial axially inner face, or bearing face (21), with a bead (B),
- a body (11) connecting the axially outer end (9) to the axially inner end (10) so as to form a single piece, and comprising at least one main reinforcement (17) providing the connection between the outer reinforcing element (15) and the inner reinforcing element (16), and comprising a substantially axial adapter seat (18) intended to come into contact with a bead (B),
- the outer reinforcing element (15) being wholly axially on the outside of the bearing face (21), and the outer reinforcing element (15) being an annular structure, referred to as a bead wire, having a mean line (M),
**characterized in that** the bead wire is made up of a stack of at least three layers (23, 24, 25) made up of metal threads and concentric with respect to the mean line (M), **in that** a first layer or core (23) comprises at least one metal thread having a diameter D1 at least equal to 0.8 mm and at most equal to 5 mm, **in that** a second layer (24) is made up of a metal thread having a diameter D2 at most equal to 1.4 times the diameter D1 and wound in a helix around the core (23), forming, with the mean line (M) of the bead wire (15), an angle A2 at least equal to 2° and at most equal to 10°, **and in that** a third layer (25) is made up of a metal thread having a diameter D3 wound in a helix around the second layer (24), forming, with the mean line (M) of the bead wire (15), an angle A3 at least equal to 2° and at most equal to 10°, and of opposite sign to that of the angle A2.

2. Adapter according to Claim 1, **in which** the core (23) of the bead wire (15) is made up of a single metal thread.

3. Adapter according to either of Claims 1 and 2, **in which** the third layer (25) is made up of a metal thread having a diameter D3 equal to the diameter D2.

4. Adapter according to any one of Claims 1 to 3, **in which** the angles A2 and A3 formed respectively by the metal threads that make up the second and third layers (24, 25) of the bead wire (15) are at least equal to 3° and at most equal to 8°.

5. Adapter according to any one of Claims 1 to 4, with the second layer (24) of the bead wire (15) comprising, in any radial section, N2 sections of individual threads of diameter D2, **in which** the number N2 of sections of individual threads of diameter D2 is at least equal to 5.

6. Adapter according to any one of Claims 1 to 5, with the second layer (24) of the bead wire (15) comprising, in any radial section, N2 sections of individual threads of diameter D2, and with the third layer (24) of the bead wire (15) comprising, in any radial section, N3 sections of individual threads of diameter D3, **in which** the number N3 of sections of individual threads of diameter D3 is at least equal to the number N2+6 of sections of individual threads of diameter D2.

7. Adapter according to any one of Claims 1 to 6, **in which** the diameter D1 of the metal thread that makes up the core (23) of the bead wire (15) is at least equal to 1.2 mm and at most equal to 4.5 mm.

8. Adapter according to any one of Claims 1 to 7, with the metal threads of which the first, second and third layers (23, 24, 25) of the bead wire (15) are made being made of steel and having a breaking strength Rm, **in which** the breaking strength Rm of a steel thread is at least equal to 1000 MPa and at most equal to 3000 MPa, preferably at least equal to 1400 MPa and at most equal to 2800 MPa.

9. Adapter according to any one of Claims 1 to 8, with the bead wire (15) having a circular radial cross section of diameter D_{S}, **in which** the diameter D_{S} of the circular radial cross section of the bead wire (15) is at least equal to 4 mm and at most equal to 25 mm, preferably at least equal to 6 mm and at most equal to 21 mm.

10. Adapter according to any one of Claims 1 to 9, **in which** the body (11) comprises an annular seat reinforcer (19) radially on the inside of the adapter seat (18).

11. Adapter according to Claim 10, **in which** the annular seat reinforcer (19) has a compression modulus greater than or equal to 1 GPa, and preferably greater than 4 GPa, and more preferably still, greater than 10 GPa.

12. Adapter according to either of Claims 10 and 11, **in which** the annular seat reinforcer (19) comprises a reinforcing element coated in a polymer material.

13. Adapter according to Claim 12, **in which** the reinforcing element of the annular seat reinforcer (19) comprises a metallic material such as steel.

14. Adapter according to Claim 12, **in which** the reinforcing element of the annular seat reinforcer (19) comprises glass fibres coated in a polymer material.

15. Adapter according to any one of Claims 1 to 9, **in which** the main reinforcement (17) of the body (11) comprises a radial superposition of at least two layers of reinforcers, the said reinforcers being mutually parallel within one and the same layer and crossed with one another from one layer to the next, **and in that** each of the layers of the main reinforcement (17) of the body (11) comprises reinforcers which make, with a circumferential direction (XX') of the tyre, an angle at least equal to 30°, and coated with a polymer material having an elastic modulus at 10% elongation at most equal to 70 MPa.

16. Rolling assembly comprising, for each bead (B) of the tyre (P), an adapter (A) according to any one of Claims 1 to 15.
